(19) Europäisches Patentamt
European Patent Office
Office européen des brevets

(11) **EP 2 885 613 B1**

(12) **EUROPÄISCHE PATENTSCHRIFT**

(45) Veröffentlichungstag und Bekanntmachung des Hinweises auf die Patenterteilung:
**24.06.2020 Patentblatt 2020/26**

(21) Anmeldenummer: **13747808.7**

(22) Anmeldetag: **26.07.2013**

(51) Int Cl.:
***G01F 1/60*** *(2006.01)*

(86) Internationale Anmeldenummer:
**PCT/EP2013/065778**

(87) Internationale Veröffentlichungsnummer:
**WO 2014/026841 (20.02.2014 Gazette 2014/08)**

(54) **MAGNETISCH-INDUKTIVES DURCHFLUSSMESSGERÄT**

MAGNETIC-INDUCTIVE FLOWMETER

DÉBITMÈTRE ÉLECTROMAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2012 DE 102012107534**

(43) Veröffentlichungstag der Anmeldung:
**24.06.2015 Patentblatt 2015/26**

(73) Patentinhaber: **Endress+Hauser Flowtec AG**
**4153 Reinach (CH)**

(72) Erfinder:
• **STINGELIN, Simon**
**4234 Zullwil (CH)**
• **BUDMIGER, Thomas**
**4107 Ettingen (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A2- 1 460 394    US-A- 3 852 646**
**US-A- 4 784 000    US-A- 4 916 381**
**US-B2- 7 836 779**

EP 2 885 613 B1

**Beschreibung**

Die vorliegende Erfindung betrifft ein magnetisch-induktives Durchflussmessgerät nach dem Oberbegriff des Anspruchs 1.

Es ist bekannt, dass ein Magnetfeld eines magnetisch-induktiven Durchflussmessgerätes durch einen getakteten Gleichstrom wechselnder Polarität erzeugt wird. Dies gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit. Dabei sind Verfahren bekannt, mit welchem die Spulenanordnung betrieben werden kann. Diese Verfahren haben bereits zu einer Verbesserung für einen zeiteffizienten Betrieb der Spulenanordnung geführt.

Bei bekannten Verfahren, beispielsweise der EP 1 460 394 A2, erfolgt eine Steuerung der Versorgungspannung durch direktes Umschalten von einer eingestellten Überspannung auf eine Haltespannung. Dieses direkte Umschalten hat allerdings zur Folge, dass Wirbelströme induziert werden, welche einem schnellen Umpolen des Magnetfeldes entgegenwirken.

Es ist nunmehr die Aufgabe der vorliegenden Erfindung ein Durchflussmessgerät bereitzustellen, welches eine Dämpfung von Wirbelströmen ermöglicht.

Die vorliegende Erfindung löst diese Aufgabe mit dem Gegenstand des Anspruchs 1.

Erfindungsgemäß weist ein magnetisch-induktives Durchflussmessgerät eine Spulenanordnung und eine Schaltung zur Steuerung einer Versorgungsspannung der Spulenanordnung auf, wobei die Schaltung ausgelegt ist, um die Versorgungsspannung der Spulenanordnung nach folgendem Spannungsverlauf zu betreiben:

A) Anstieg der Spannung von einer Startspannung bis zu einer Überspannung;
B) Ggf. Halten der Spannung auf der Überspannung;
C) Abfall von der Überspannung bis auf eine Haltespannung;

wobei die Schaltung den Abfall der Spannung von der Überspannung bis zur Haltespannung durch Einstellen der Spannung auf zumindest zwei oder mehr vorgegebene Zwischensollwerte steuert.

Anders als beim bisherigen direkten Umschalten von Überspannung auf Haltespannung folgt der Spannungsverlauf im Bereich des Abfalls von der Überspannung bis auf die Haltespannung nunmehr einer Anzahl von Zwischenwerten bis zum Erreichen der Haltespannung. Durch diese Steuerung des Spannungsverlaufes kann das Auftreten von Wirbelströmen zumindest wesentlich verringert werden.

Vorteilhafte Ausgestaltungen der Erfindung sind Gegenstand der Unteransprüche.

Es ist von Vorteil, wenn die Schaltung den Abfall der Spannung von der Überspannung bis zur Haltespannung durch Einstellen der Spannung auf zumindest fünf, vorzugsweise zumindest zehn, vorgegebene Zwischensollwerte steuert. Die Zwangsführung kann auch anhand von mehr als 200 Zwischensollwerten erfolgen. Theoretisch genügen bereits zwei Zwischensollwerte, um einen messbaren Effekt hinsichtlich der Wirbelstromdämpfung zu erreichen, um allerdings auch für einfach-aufgebaute Schaltungen eine befriedigende Wirbelstrom-Dämpfung zu erreichen, sollten allerdings zumindest 5 Zwischensollwerte, vorzugsweise - sofern dies die Schaltung zulässt - 10 Zwischensollwerte zur Steuerung des Abfalls vorgegeben werden.

Das konkrete Zeitintervall für einen gesteuerten Abfall auf die Haltespannung richtet sich u.a. nach der Nennweite des Messrohres. Dabei muss ein Kompromiss geschlossen werden zwischen der Zeit, welche die Steuerung des Abfalls auf die Haltespannung für eine Minimierung der Wirbelströme benötigt und der Zeit, in welcher sich das Magnetfeld letztlich den Endwert erreichen soll. In diesem Zusammenhang hat es sich als vorteilhaft erwiesen, wenn die Schaltung den Abfall der Spannung von der Überspannung bis zur Haltespannung einem Messrohrdurchmesser von DN=10 bis DN=100 derart steuert, dass die Spannung auf die Haltespannung innerhalb eines Zeitintervalls von 20 bis 900 $\mu$s, vorzugsweise 30 bis 800 $\mu$s mit einer Genauigkeit von $\pm$ 2 V, vorzugsweise $\pm$ 0,2 V eingestellt ist.

Bei größeren Nennweiten ist es vorteilhaft, wenn die Schaltung den Abfall der Spannung von der Überspannung bis zur Haltespannung einem Messrohrdurchmesser von DN>100 bis DN=2400 derart steuert, dass die Spannung auf die Haltespannung innerhalb eines Zeitintervalls von 600 bis 10000 $\mu$s, vorzugsweise 750 bis 8000 $\mu$s mit einer Genauigkeit von $\pm$ 2 V, vorzugsweise $\pm$ 0,2 V eingestellt ist.

Es ist von Vorteil, wenn das Zeitintervall zwischen zwei Zwischensollwerten zumindest 0,05 $\mu$s, vorzugsweise zumindest 0,3 $\mu$s, beträgt, um ein Auftreten von geringen Wirbelstromeffekten durch zu schnellen Zwischensollwertwechsel zu verhindern.

Eine besonders günstige Form eines Spannungsabfalls ist die Form eines Polynoms oder einer Exponentialfunktion.

Die Schaltung kann in vorteilhafter kompakter Bauweise mit zumindest einer Steuervorrichtung, mindestens einem D/A-Wandler, einer Spannungsversorgung und einem A/D-Wandler realisiert werden.

Zur Kontrolle des Dämpfungsverhaltens von Wirbelströmen kann die Schaltung zudem den Verlauf der Stromstärke messen bzw. ermitteln.

Es ist von Vorteil, wenn das Steuern des Abfalls der Überspannung auf die Haltespannung durch Einstellen der Spannung auf die zumindest zwei oder mehr vorgegebenen Zwischensollwerte III, IV ein schnelleres Einstellen auf ein epsilon-Band eines statischen Magnetfeldes erfolgt, als bei einer direkten Umschaltung von der Überspannung auf die Haltespannung, wobei das epsilon-Band eine Standartabweichung von $\pm 1\%$ eines Istwertes des von der Spulenanordnung erzeugten zeitabhängigen Magnetfeldes von einem Sollwert des stationären Magnetfeldes umfasst. Dadurch kann ein schnelleres Umpolen und eine schnellere Messabfolge insgesamt erreicht werden.

Nachfolgend wird ein bevorzugtes Ausführungsbeispiel anhand von Figuren näher erläutert. Sie zeigen:

Fig. 1a   ein Diagramm der Spulenspannung über der Zeit mit zwei unterschiedlichen Spannungsverlaufskurven;
Fig. 1b   ein Diagramm des Spulenstroms über der Zeit mit zwei unterschiedlichen Stromverlaufskurven ;
Fig. 1c   ein Diagramm des B-Feldes über der Zeit mit zwei unterschiedlichen Verlaufskurven zweier Magnetfelder;
Fig. 1d   ein Diagramm der Abweichungen der Verlaufskurven der Fig 1c von einem zu erreichenden Endwert;
Fig. 1e   ein vergrößerter Ausschnitt der Fig. 1d;
Fig. 2   ein vereinfachter Schaltplan für eine Steuervorrichtung zum Betreiben der Spulenanordnung;
Fig.3a   ein Diagramm eines weiteren Spannungsverlaufs; und
Fig.3b   ein Diagramm eines weiteren Spannungsverlaufs in vergrößerter Form.

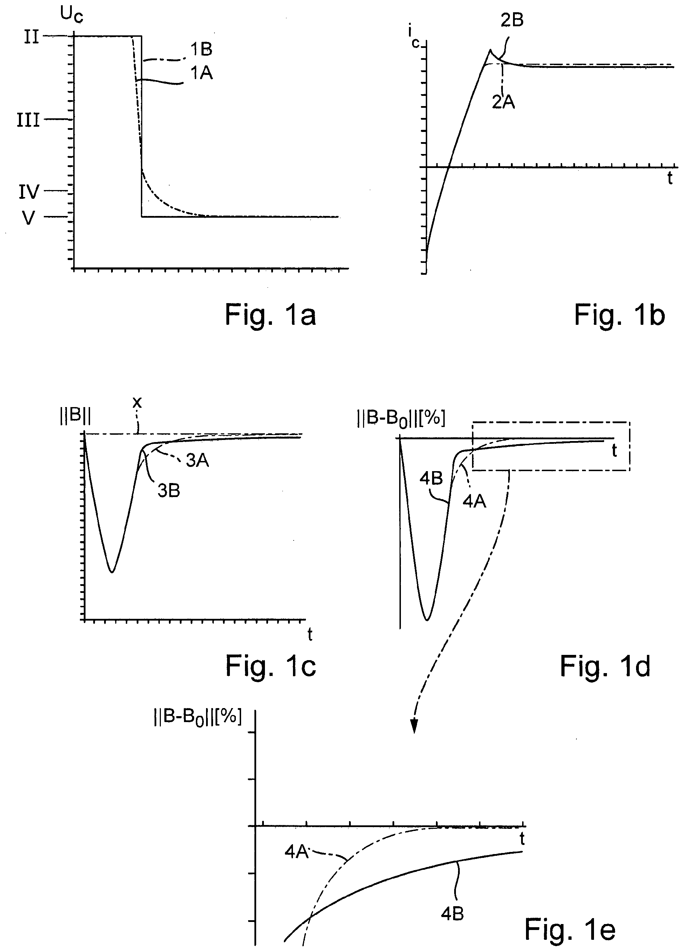

Fig. 1a zeigt einen optimierten Teilbereich eines ersten und eines zweiten Spannungsverlaufes 1A und 1B beim Betreiben einer Spulenanordnung. Dabei entspricht der erste Spannungsverlauf 1A der erfindungsgemäßen Ausführungsvariante und der zweite Spannungsverlauf 1B einer Ausführung nach dem Stand der Technik, bei welcher ein direktes Umschalten von einer Überspannung auf eine Haltespannung erfolgt.

Eine entsprechende Spulenanordnung findet in einem magnetisch-induktiven Durchflussmessgerät Anwendung. Der in Fig. 1a dargestellte optimierte Spannungsverlauf I ist für ein Messrohr DN 600 ausgelegt.

Der Aufbau und das Messprinzip eines magnetisch-induktiven Durchflussmessgerätes sind grundsätzlich bekannt. Gemäß dem Faraday'schen Induktionsgesetz wird in einem Leiter, der sich in einem Magnetfeld bewegt, eine Spannung induziert. Beim magnetisch-induktiven Messprinzip entspricht der fließende Messstoff dem bewegten Leiter. Ein Magnetfeld mit konstanter Stärke wird durch zwei Feldspulen zu beiden Seiten eines Messrohres erzeugt. Senkrecht dazu befinden sich an der Rohrinnenwand des Messrohres zwei Messelektroden, welche die beim Durchfließen des Messstoffes erzeugte Spannung abgreifen. Die induzierte Spannung verhält sich proportional zur Durchflussgeschwindigkeit und damit zum Volumendurchfluss. Das durch die Feldspulen aufgebaute Magnetfeld wird durch einen getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit. Es sind magnetischinduktive Durchflussmessgeräte mit Spulenanordnungen mit mehr als zwei Feldspulen bekannt und anderer geometrischer Anordnung bekannt.

Die Spannung für den Betrieb der Spulenanordnung wird durch eine im Durchflussmessgerät angeordnete Steuervorrichtung auf einen vorbestimmten Spannungsverlauf voreingestellt. Alternativ kann die Steuervorrichtung auch außerhalb des Durchflussmessgerätes angeordnet sein und die Spulenspannung über elektronische Verbindung oder drahtlos-Verbindung steuern.

Es ist bekannt, dass im Betrieb eines magnetisch-induktiven Durchflussmessers ein getaktetes Umpolen der Spulen erfolgt, so dass ein Spannungsverlauf jeweils in einem Takt im positiven Feld und einem im negativen Feld erfolgt. Der Einfachheit halber wird im Folgenden allerdings nur der Spannungsverlauf im positiven Feld beschrieben, welcher periodisch wiederkehrt. Nachfolgend wird der Spannungsverlauf A1 des erfindungsgemäßen Ausführungsbeispiels mit einer Nennweite DN 600 beschrieben.

Dabei wird zunächst in einem Schritt A die Spannung von einem nicht näherdargestellten Startpunkt I, welcher beispielsweise bei 0V oder im negativen Feld liegt, auf einen Überspannungswert II durch Zufuhr eines Stromes erhöht. Diese Erhöhung erfolgt in kurzer Zeit. Bei Erreichen des Überspannungswertes II wird die Stromzufuhr verringert, wodurch es aufgrund der Eigenschwingung der Spulen zu einem Einschwingen der stromproportionalen Spannung auf oder um den Überspannungswert II kommt. Die Einstellung auf den Überspannungswert erfolgt vorzugsweise derart, dass sich ein monotoner Anstieg ergibt.

Nach dem Erreichen des Überspannungswertes II kann die Spannung entweder gehalten werden oder direkt im Anschluss daran ein Abfall auf eine Haltespannung V erfolgen bzw. eingeleitet werden.

Dieses Einschwingen auf den Überspannungswert II, gemäß Schritt B, ist somit eine bevorzugte optionale Einstellung der Steuervorrichtung. Als Einschwingen sind dabei Abweichungen vom Überspannungswert II aufgrund der Eigeninduktivität der Spule zu verstehen, welche im zeitlichen Verlauf abklingen. Dies kann im einfachsten Fall ein einmaliges Anwachsen der Spannung über den Überspannungswert II hinaus sein und ein sich daran anschließender Abfall auf den Überspannungswert II. Dabei ist die Steuervorrichtung derart eingestellt sein, dass beim Wiedererreichen des Überspannungswertes II ein weiterer Abfall der Spannung erfolgt. Alternativ kann auch ein mehrmaliges Überschreiten und Unterschreiten des Überspannungswertes II während des Haltens der Spannung erfolgen.

Im Anschluss an das Einstellen auf den Überspannungswert II erfolgt eine Verringerung der Spannung auf einen ersten Zwischensollwert III der Spannung. Dieser Zwischensollwert III ist durch die Steuervorrichtung vorgegeben.

Der Spannungsverlauf während dieser Verringerung ist im vorliegenden Ausführungsbeispiel streng monoton. Das heißt, dass der dem vorhergehenden Spannungswert nachfolgende Spannungswert stets kleiner ist und nicht gleich oder größer dem vorangegangenen Spannungswert ist. Dabei ist die Steuervorrichtung entsprechend ausgestaltet, um diesen streng-monotonen Abfall auf den Zwischenwert III zu ermöglichen. Nach Erreichen dieses ersten Zwischensollwertes III erfolgt das Einstellen der Spannung auf einen zweiten Zwischensollwert IV.

Die beiden in Fig. 1a eingezeichneten Zwischensollwerte sind allerdings nur symbolisch für ca. 100-400 aufeinanderfolgende Zwischensollwerte bis zum Erreichen der Haltespannung.

Bei Messrohren mit kleineren Nennweiten, z.B. DN 50 kann sich ausgehend vom Zwischenwert III auch ein geringer Anstieg auf die Haltespannung IV ergeben.

Nach dem in Fig. 1a dargestellten optimierten Spannungsverlauf kann die Regelschaltung den tatsächlichen Spannungsverlauf einstellen.

Der Teilabschnitt des Spannungsverlaufes A1, welcher den Abfall auf einen Zwischenwert III, gemäß Schritt D, kennzeichnet, ist insbesondere die Lösung eines optimalen Steuerungsproblems. Dieses Steuerungsproblem wird für die Wirbelstromgleichung auf Basis der Maxwell-Gleichungen gelöst vorzugsweise auf folgende Weise:

$$F(A, u) := \frac{\lambda_T}{2} \int_\Omega (curl\ A(T) - curl\ A_0)^2 dx$$

$$+ \frac{\lambda_Q}{2} \int_\Omega (curl\ A\ (T) - curl\ A_0)^2 dxdt + \frac{\lambda_U}{2} \int_0^T u(t)^2 dt \to min$$

Dieses Funktional wird minimiert mit der folgenden Nebenbedingung

$$\dot{\sigma A} + curl\ \mu^{-1}\ curl\ A - j = 0, ...\ wobei\ A(0) = -A_0\ in\ \Omega; \quad \text{(Bedingung 1)}$$

$$\frac{N_c}{A_c} \int_{\Omega_C} \dot{A}\ (t) \cdot wdx + R_C i_c(t) = u_C(t), ...\ wobei\ i_C\ von\ 0 = i_0, \quad \text{(Bedingung 2)}$$

für

T = Endzeit
A = Vektorpotential zum Umformulieren des Maxwell-Ansatzes
σ = Leitfähigkeit
μ = magnetische Permeabilität
$N_C$ = Anzahl der Windungen einer Spule
$A_C$ = Spulenquerschnitt
$R_C$ = Spulenwiderstand
j = Stromdichte
U = Spulenspannung zum zeitpkt t
Ω = Rechengebiet, typischerweise ein Teilgebiet eines dreidim. Raumes
$\lambda_T$, $\lambda_U$ und $\lambda_Q$ = Gewichtungsparameter (positive Zahlen)
Q=Ω x (0 ... t)
Curl = Rot
+/- $A_0$ = Magnetfeld (Anfangs- und Endzustand)
x = Ortsvariable
t = Zeit
Ä= Zeitableitung von A
I$_0$ = Spulenstrom

Anhand des oben genannten Funktionals kann der Verlauf der Spulenspannung $u_c$ in einem Zeitintervall ermittelt werden.

Der durch die Steuerung erwünschte Effekt einer Dämpfung von Wirbelstromeffekten lässt sich anhand der Fig. 1b näher erläutern. Fig. 1b zeigt die entsprechenden ersten und zweiten Stromverläufe 2A und 2B zu den ersten und zweiten Spannungsverlaufskurven 1A und 1B.

Wie anhand von Fig. 1b erkennbar ist, stellt sich die Stromverlaufskurve 2A nach einem Anstieg relativ schnell auf einen konstanten Stromendwert ein. Diese Stromverlaufskurve 2A entspricht der dem Spannungsverlauf 1A des erfindungsgemäßen Ausführungsbeispiels.

Die zweite Stromverlaufskurve 2B entspricht dem Spannungsverlauf 1B für ein direktes Umschalten von Überspannung auf Haltespannung. Wie man aus Fig. 1b erkennen kann, kommt es bei Erreichen des Stromendwertes zu einem weiteren Anwachsen der Stromstärke und anschließend zu einem Abfall - bis sich ein konstanter Stromendwert einstellt. Dieses Anwachsen über den Stromendwert hinaus ist signifikant für die Eigeninduktivität der Spule und für ein Auftreten von Wirbelströmen.

Die Auswirkungen der beiden in Fig. 1b abgebildeten Stromverlaufskurven auf den zeitlichen Verlauf von Magnetfeldern ist in Fig. 1c dargestellt. Fig. 1c zeigt eine erste und eine zweite Verlaufskurven für jeweils ein erstes und ein zweites Magnetfeld. Die erste Verlaufskurve eines ersten Magnetfeldes 3A korrespondiert dabei zur ersten Stromverlaufskurve 2A und zur ersten Spannungsverlaufskurve 1A. Dabei stellt der Strich X einen Endwert dar, welchen das Magnetfeld erreichen soll.

Die zweite Verlaufskurve des zweiten Magnetfeldes 3B korrespondiert zur zweiten Stromverlaufskurve 2B und zur zweiten Spannungsverlaufskurve 1B.

Wie man aus Fig. 1c erkennt, ist der Anstieg der zweiten Verlaufskurve 3B nach Durchlaufen eines Minimums zwar anfänglich steiler, allerdings benötigt diese Verlaufskurve 3B in der Folge eine wesentlich längere Zeit zum Erreichen des Endwertes X als die erste Verlaufskurve 3A des ersten Magnetfeldes.

Fig. 1d zeigt den Verlauf der zeitlichen Abweichung des ersten und zweiten Magnetfeldes B(t) vom Endwert $B_0$. Fig. 1e stellt dabei einen vergrößerten Ausschnitt des hinteren Bereichs der Fig. 1d dar. Sofern also der zeitlich-veränderliche Wert des Magnetfeld B(t) den Endwert $B_0$ erreicht, ist die Abweichung 0%. Ein stabiles Magnetfeld liegt vor, sofern die Abweichung des zeitlich-veränderlichen Magnetfeldes B(t) vom Endwert $B_0$ ±1% beträgt. Dieser Bereich des Diagramms wird durch ein sogenanntes Epsilon-Band definiert. Wie man erkennt, benötigt dabei die erste Verlaufskurve wesentlich weniger Zeit zum Erreichen dieses Epsilon-Bandes.

Es hat sich somit überraschend gezeigt, dass eine Einsteuerung des Abfalls der Versorgungsspannung gegenüber einem direkten Umschalten zwar zunächst mehr Zeit zum Erreichen der Haltespannung benötigt, allerdings dieser scheinbare Nachteil durch ein wesentlich schnelleres Einstellen eines stabilen Magnetfeldes durch die Dämpfung von Wirbelströmen ermöglicht.

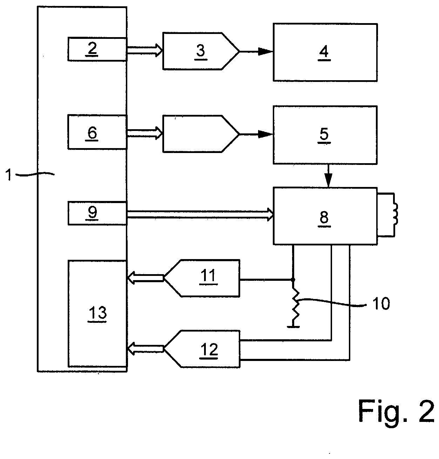

Eine entsprechende Regelschaltung kann aus einer Anordnung bestehen, wie sie in Fig. 2 dargestellt ist.

Fig. 2 weist eine Steuervorrichtung 1 als Bestandteil der Steuerschaltung auf. In dieser Steuervorrichtung 1 ist eine erste Speichereinheit 2 integriert, welche einen Vorgabewert für eine Versorgungsspannung bzw. eine Speisespannung ausgibt.

Dieser vorgegebene Wert einer Versorgungsspannung wird an einen Digital/Analog Wandler 3 übertragen, welcher das digitale Signal in ein analoges Signal umwandelt. Dieses Signal wird als Sollwert an eine variable Speisespannungsquelle 4 übertragen, welches eine dem Sollwert entsprechende voreingestellte Speisespannung abgibt. Die Speisespannung wird an einen Spulenspannungsregler 5 übertragen. Dieser Spulenspannungsregler 5 wird über eine in der Regelvorrichtung 1 integrierte zweite Speichereinheit 6 mit einem Sollwert versorgt, welcher zuvor durch einen Digital/Analog-Wandler in ein analoges Signal umgewandelt wird. Im Spulenspannungsregler 5 erfolgt die Feineinstellung der voreingestellten Speisespannung. Der von der integrierten zweiten Speichereinheit 6 vorgegebene Sollwert entspricht im zeitlichen Verlauf dem in Fig. 1 dargestellten Spannungsverlauf.

An diesen Spulenspannungsgenerator 5 wird dabei ebenfalls durch einen Digital/Analogwandler 7 eine Sollspannung übertragen, welche dem in Fig. 1 dargestellten Spannungsverlauf entspricht. Dieser Spannungsverlauf ist in einem Speicher 6 der Steuervorrichtung 2 abgespeichert und wird dem Spulenspannungsgenerator 4 zur Einstellung der Speisespannung zur Verfügung gestellt.

Von dem Spulenspannungsgenerator 4 wird eine Spulenspannung an eine H-Brückenschaltung 5 weitergeleitet. Die H-Brückenschaltung 5 führt einen Taktwechsel durch und dient der Stromrichtungsdefinition. Ausgegeben wird ein Spulenstrom und eine Spulenspannung, mit welchen die Spulenanordnung zur Erzeugung eines Magnetfeldes betrieben wird. Im Anschluss daran werden der Spulenstrom und die Spulenspannung mittels je eines Analog/Digitalwandlers in digitale Signale umgewandelt und durch die Regelvorrichtung 2 ausgewertet.

Der Sollwert wird dabei aus dem in Fig. 1 dargestellten Kurvenverlauf entnommen, welcher im konkreten Fall eine Funktion darstellt, die zumindest abhängig ist von der Magnetsystemgeometrie, den Materialeigenschaften des Messrohres, der Leitfähigkeit der Polschuhe, der Feldrückführungsbleche, der B-H Kurve des Magnetfeldes und dem resistiven Widerstand der n-Spulen, wobei n-die Anzahl der Spulen beschreibt. Die Funktion weist zudem einen oberen Grenzwert auf, welcher kleiner oder gleich dem Überspannungswert ist.

Daher ist es von Vorteil, wenn die Versorgungsspannung anhand eines zeitabhängigen Sollwertes eingestellt wird, welcher dem Spannungsverlauf folgt, wobei der Spannungsverlauf die Abhängigkeit der Spannung

a) von der geometrischen Anordnung von im magnetisch-induktiven Durchflussmessgerät angeordneten Magnetsystem;

b) von der Leitfähigkeit und magnetischen Permeabilität der angeordneten Feldrückführungsblechen und Polschuhen

c) von den resistiven Widerständen der n-Spulen der Spulenanordnung aufweist.

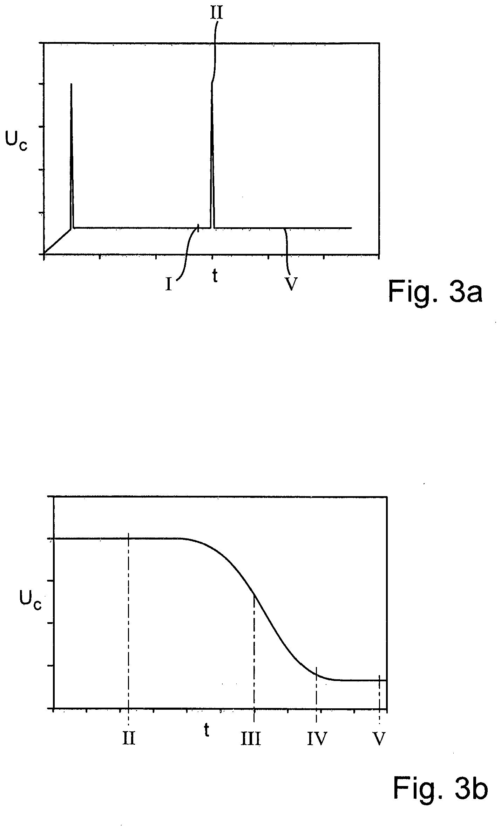

Fig. 3a und 3b zeigen ein weiteres Ausführungsbeispiel für einen vorgegebenen Spannungsverlauf, welcher jedoch im Vergleich zur Fig. 1a weniger optimal verläuft. Dabei ist Fig. 3b ein Ausschnitt der Fig. 3a.

## Patentansprüche

1.  Magnetisch-induktives Durchflussmessgerät mit einer Spulenanordnung und einer Schaltung zur Steuerung einer Versorgungsspannung der Spulenanordnung,
    wobei die Schaltung ausgelegt ist, um die Versorgungsspannung der Spulenanordnung nach folgendem Spannungsverlauf zu betreiben:

    A) Anstieg der Spannung von einer Startspannung I bis zu einer Überspannung II;
    B) Ggf. Halten der Spannung auf der Überspannung II;
    C) Abfall von der Überspannung II bis auf eine Haltespannung V;

    **dadurch gekennzeichnet, dass** die Schaltung den Abfall der Spannung von der Überspannung bis zur Haltespannung durch Einstellen der Spannung auf zumindest zwei oder mehr vorgegebene Zwischensollwerte III, IV steuert.

2.  Magnetisch-induktives Durchflussmessgerät nach Anspruch 1, **dadurch gekennzeichnet, dass** die Schaltung den Abfall der Spannung von der Überspannung bis zur Haltespannung durch Einstellen der Spannung auf zumindest fünf, vorzugsweise zumindest zehn, vorgegebene Zwischensollwerte III, IV steuert.

3.  Magnetisch-induktives Durchflussmessgerät nach Anspruch 1 oder 2, **dadurch gekennzeichnet, dass** die Schaltung den Abfall der Spannung von der Überspannung bis zur Haltespannung bei einem Messrohrdurchmesser von DN=10 bis DN=100 derart steuert, dass die Spannung auf die Haltespannung innerhalb eines Zeitintervalls von 20 bis 900 $\mu$s, vorzugsweise 30 bis 800 $\mu$s mit einer Genauigkeit von $\pm$ 2 V, vorzugsweise $\pm$ 0,2 V eingestellt ist.

4.  Magnetisch-induktives Durchflussmessgerät nach Anspruch 1 oder 2, **dadurch gekennzeichnet, dass** die Schaltung den Abfall der Spannung von der Überspannung bis zur Haltespannung bei einem Messrohrdurchmesser von DN>100 bis DN=2400 derart steuert, dass die Spannung auf die Haltespannung innerhalb eines Zeitintervalls von 600 bis 10000 $\mu$s, vorzugsweise 750 bis 8000 $\mu$s mit einer Genauigkeit von $\pm$ 2 V, vorzugsweise $\pm$ 0,2 V eingestellt ist.

5.  Magnetisch-induktives Durchflussmessgerät nach einem der vorhergehenden Ansprüchen, **dadurch gekennzeichnet, dass** das Zeitintervall zwischen zwei Zwischensollwerten zumindest 0,05 $\mu$s, vorzugsweise zumindest 0,3 $\mu$s, beträgt.

6.  Magnetisch-induktives Durchflussmessgerät nach einem der vorhergehenden Ansprüche, **dadurch gekennzeichnet, dass** ein Teilabschnitt des Spannungsverlaufes, welcher den Abfall, gemäß Schritt C, kennzeichnet, die Form eines Polynoms beschreibt.

7.  Magnetisch-induktives Durchflussmessgerät nach einem der vorhergehenden Ansprüche, **dadurch gekennzeichnet, dass** ein Teilabschnitt des Spannungsverlaufes, welcher den Abfall, gemäß Schritt C kennzeichnet, die Form einer Exponentialfunktion beschreibt.

8.  Magnetisch-induktives Durchflussmessgerät nach einem der vorhergehenden Ansprüche, **dadurch gekennzeichnet dass** die Schaltung zumindest eine Steuervorrichtung, mindestens einen D/A-Wandler, eine Spannungsversorgung und einen A/D-Wandler aufweist.

9.  Magnetisch-induktives Durchflussmessgerät nach einem der vorhergehenden Ansprüche, **dadurch gekennzeichnet, dass** die Schaltung zudem den Verlauf der Stromstärke misst.

10. Magnetisch-induktives Durchflussmessgerät nach einem der vorhergehenden Ansprüche, **dadurch gekennzeich-**

**net, dass** durch das Steuern des Abfalls der Überspannung auf die Haltespannung durch Einstellen der Spannung auf die zumindest zwei oder mehr vorgegebenen Zwischen-sollwerte III, IV ein schnelleres Einstellen auf ein epsilon-Band eines statischen Magnetfeldes erfolgt, als bei einer direkten Umschaltung von der Überspannung auf die Haltespannung,

wobei das epsilon-Band eine Standartabweichung von $\pm 1\%$ eines Istwertes des von der Spulenanordnung erzeugten zeitabhängigen Magnetfeldes von einem Sollwert des stationären Magnetfeldes umfasst.

**Claims**

1.  Electromagnetic flowmeter with a coil arrangement and a circuit to control a supply voltage of the coil arrangement, wherein the circuit is designed to operate the supply voltage of the coil arrangement according to the following voltage curve:

    A) Increase in the voltage from a starting voltage I to an overvoltage II ;
    B) Where necessary, maintaining the voltage at overvoltage II ;
    C) Drop from overvoltage II to a holding voltage V;

    **characterized in that**
    the circuit controls the drop in voltage from the overvoltage to the holding voltage by setting the voltage to at least two (or more) predefined intermediate target values III, IV.

2.  Electromagnetic flowmeter as claimed in Claim 1, **characterized in that** the circuit controls the drop in voltage from the overvoltage to the holding voltage by setting the voltage to at least five, preferably ten, predefined intermediate target values III, IV.

3.  Electromagnetic flowmeter as claimed in Claim 1 or 2, **characterized in that** the circuit controls the drop in voltage from the overvoltage to the holding voltage with a measuring tube diameter DN=10 to DN=100 in such a way that the voltage is set to the holding voltage within a time interval of 20 to 900 $\mu$s, preferably of 30 to 800 $\mu$s with an accuracy of $\pm$ 2 V, preferably $\pm$ 0.2 V.

4.  Electromagnetic flowmeter as claimed in Claim 1 or 2, **characterized in that** the circuit controls the drop in voltage from the overvoltage to the holding voltage with a measuring tube diameter DN>100 to DN=2400 in such a way that the voltage is set to the holding voltage within a time interval of 600 to 10000 $\mu$s, preferably 750 to 8000 $\mu$s with an accuracy of $\pm$ 2 V, preferably $\pm$ 0.2 V.

5.  Electromagnetic flowmeter as claimed in one of the previous claims, **characterized in that** the time interval between two intermediate target values is at least 0.05 $\mu$s, preferably at least 0.3 $\mu$s.

6.  Electromagnetic flowmeter as claimed in one of the previous claims, **characterized in that** a subsegment of the voltage curve, which indicates the drop as per Step C, describes the shape of a polynomial.

7.  Electromagnetic flowmeter as claimed in one of the previous claims, **characterized in that** a subsegment of the voltage curve, which indicates the drop as per Step C, describes the shape of an exponential function.

8.  Electromagnetic flowmeter as claimed in one of the previous claims, **characterized in that** the circuit has at least a control unit, at least an D/A converter, a voltage supply and an A/D converter.

9.  Electromagnetic flowmeter as claimed in one of the previous claims, **characterized in that** the circuit also measures the curve of the strength of the current.

10. Electromagnetic flowmeter as claimed in one of the previous claims, **characterized in that,** by controlling the drop from the overvoltage to the holding voltage by setting the voltage to the at least two (or more) predefined intermediate target values III, IV, faster adjustment to an epsilon band of a static magnetic field takes place than in the case of a direct switchover from the overvoltage to the holding voltage, wherein the epsilon band comprises a standard deviation of $\pm$ 1 % of an actual value of the time-dependent magnetic field, generated by the coil arrangement, in relation to a target value of the stationary magnetic field.

**Revendications**

1. Débitmètre magnéto-inductif avec un arrangement de bobines et un circuit destiné à la commande d'une tension d'alimentation de l'arrangement de bobines, le circuit étant conçu de telle sorte à commander la tension d'alimentation de l'arrangement de bobines selon la courbe de tension suivante :

   A) Augmentation de la tension à partir d'une tension de départ I jusqu'à une surtension II ;
   B) Le cas échéant, maintien de la tension à la surtension II ;
   C) Abaissement de la tension à partir de la surtension II jusqu'à une tension de maintien V ;

   **caractérisé en ce que**
   le circuit commande l'abaissement de la tension à partir de la surtension jusqu'à la tension de maintien en réglant la tension à au moins deux (ou plus) valeurs de consigne intermédiaires III, IV prédéfinies.

2. Débitmètre magnéto-inductif selon la revendication 1, **caractérisé en ce que** le circuit commande l'abaissement de la tension à partir de la surtension jusqu'à la tension de maintien en réglant la tension à au moins cinq, de préférence dix valeurs de consigne intermédiaires III, IV prédéfinies.

3. Débitmètre magnéto-inductif selon la revendication 1 ou 2, **caractérisé en ce que** le circuit commande l'abaissement de la tension à partir de la surtension jusqu'à la tension de maintien, dans le cas d'un diamètre de tube de mesure DN=10 à DN=100, de telle sorte que la tension est réglée à la tension de maintien dans un intervalle de temps de 20 à 900 $\mu$s, de préférence de 30 à 800 $\mu$s avec une précision de $\pm$ 2 V, de préférence $\pm$ 0,2 V.

4. Débitmètre magnéto-inductif selon la revendication 1 ou 2, **caractérisé en ce que** le circuit commande l'abaissement de la tension à partir de la surtension jusqu'à la tension de maintien, dans le cas d'un diamètre de tube de mesure DN>100 à DN=2 400, de telle sorte que la tension est réglée à la tension de maintien dans un intervalle de temps de 600 à 10 000 $\mu$s, de préférence de 750 à 8 000 $\mu$s avec une précision de $\pm$ 2 V, de préférence $\pm$ 0,2 V.

5. Débitmètre magnéto-inductif selon l'une des revendications précédentes, **caractérisé en ce que** l'intervalle de temps entre deux valeurs de consigne intermédiaires est d'au moins 0,05 $\mu$s, de préférence d'au moins 0,3 $\mu$s.

6. Débitmètre magnéto-inductif selon l'une des revendications précédentes, **caractérisé en ce qu'**un segment partiel de la courbe de tension, lequel caractérise l'abaissement selon l'étape C, décrit la forme d'un polynôme.

7. Débitmètre magnéto-inductif selon l'une des revendications précédentes, **caractérisé en ce qu'**un segment partiel de la courbe de tension, lequel caractérise l'abaissement selon l'étape C, décrit la forme d'une fonction exponentielle.

8. Débitmètre magnéto-inductif selon l'une des revendications précédentes, **caractérisé en ce que** le circuit comporte au moins un dispositif de commande, au moins un convertisseur N-A, une alimentation en tension et un convertisseur A-N.

9. Débitmètre magnéto-inductif selon l'une des revendications précédentes, **caractérisé en ce que** le circuit mesure en outre la courbe de l'intensité du courant.

10. Débitmètre magnéto-inductif selon l'une des revendications précédentes, **caractérisé en ce que**, par la commande de l'abaissement à partir de la surtension jusqu'à la tension de maintien en réglant la tension aux au moins deux (ou plus) valeurs de consigne intermédiaires III, IV prédéfinies, un réglage plus rapide s'effectue à une bande epsilon d'un champ magnétique statique que dans le cas d'une commutation directe de la surtension à la tension de maintien, la bande epsilon présentant un écart-type de $\pm$ 1 % d'une valeur réelle du champ magnétique fonction du temps, généré par l'arrangement de bobines, par rapport à une valeur de consigne du champ magnétique stationnaire.

Fig. 1a

Fig. 1b

Fig. 1c

Fig. 1d

Fig. 1e

Fig. 2

Fig. 3a

Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1460394 A2